# EUROPÄISCHE PATENTSCHRIFT

(11) **EP 2 931 543 B1**
(45) Veröffentlichungstag und Bekanntmachung des Hinweises auf die Patenterteilung: **26.12.2018**
(21) Anmeldenummer: 13783488.3
(22) Anmeldetag: 25.10.2013
(51) Int. Cl.: B60J 7/02

(54) **DACHMODUL FÜR EIN FAHRZEUGDACH EINES PERSONENKRAFTWAGENS**
ROOF MODULE FOR A VEHICLE ROOF OF A PASSENGER VEHICLE
MODULE DE TOIT DESTINÉ AU TOIT D'UNE VOITURE PARTICULIÈRE

(30) Priorität: 15.12.2012 DE 102012024566
(43) Veröffentlichungstag der Anmeldung: 21.10.2015
(73) Patentinhaber: Daimler AG, 70327 Stuttgart (DE)
(72) Erfinder: BERBEROGLU, Oguz, 70565 Stuttgart (DE); DEMMER, Achim, 71106 Magstadt (DE); DÖFFINGER, Stefan, 71263 Weil der Stadt (DE); KOBER, Peer-Olaf, 71120 Grafenau (DE); SCHRADER, Jürgen, 71093 Weil im Schönbuch (DE)
(74) Vertreter: JENSEN & SON
(86) Internationale Anmeldenummer: PCT/EP2013/003221
(87) Internationale Veröffentlichungsnummer: WO 2014/090354

(56) Entgegenhaltungen:
- EP-A1- 2 664 473
- EP-A2- 1 036 688
- WO-A1-2008/034433
- DE-A1-102004 001 587

## Beschreibung

Die Erfindung betrifft ein Dachmodul für ein Fahrzeugdach eines Personenkraftwagens gemäß dem Oberbegriff von Patentanspruch 1.

Derartige Dachmodule sind aus dem Serienfahrzeugbau von Personenkraftwagen in vielfältigen Ausführungsformen bekannt und werden üblicherweise zwischen jeweiligen seitlichen Dachrahmen und einem vorderen und hinteren Dachquerträger des Fahrzeugdaches eingesetzt. Der Vorteil derartiger Dachmodule ist es, dass Fahrzeuge somit auf einfache und kostengünstige Weise mit unterschiedlichen Dächern, beispielsweise Schiebe- und/oder Hebedächer, Panoramadächer, einfache Blechdächer oder dergleichen ausgestattet werden können. Das vorliegende Dachmodul umfasst in Fahrzeugquerrichtung ein Deckelelement, welches zwischen einer eine Dachöffnung überdeckenden Schließstellung und wenigstens einer die Dachöffnung in dem Teilbereich freigebenden Offenstellung entlang von in Fahrzeugquerrichtung voneinander beabstandeten Führungselementen geführt verstellbar ist.

Des Weiteren ist es bekannt, Fahrzeugdächer mit entsprechenden Energieabsorptionselementen zu versehen, welche zwischen dem Rohbau des Fahrzeugdaches und einem diesen abdeckenden Verkleidungselement angeordnet sind. Die Energieabsorptionselemente dienen dazu, bei einem zumindest mittelbaren Aufprall des Kopfes eines Fahrzeuginsassen auf das Energieabsorptionselement Energie zu absorbieren und den Fahrzeuginsassen entsprechend zu schützen. Die Verwendung derartiger Energieabsorptionselemente ist jedoch mit sehr hohen Kosten und einem höheren Gewicht der Fahrzeugdächer verbunden.

Bei der WO 2008/034433 A1 ist das Energieabsorptionselement unterhalb des Führungselementes als geschlossenes Profil ausgebildet, welches eine weichere Struktur aufweist verglichen zum Führungselement. Es weist in Fahrzeugquerrichtung eine große Erstreckung auf, um ein direktes Auftreffen eines Passagiers auf das Führungselement von allen Seiten zu verhindern. Diese Anordnung benötigt vergleichsweise viel Bauraum. Außerdem erstreckt sich der Bauraum unterhalb des Führungselementes, was zu einer Reduzierung der Innenraumhöhe führt und daher unerwünscht ist.

Bei der nicht vorveröffentlichten EP 2664473 A1 ist das Energieabsorptionselement seitlich zum Führungselement angeordnet und als offenes Profil ausgestaltet. Allerdings ist das Energieabsorptionselement zum Innenraum hin neben dem Führungselement angeordnet. In diesem Fall ist die Energieabsorption gewährleistet, falls der Passagier im Bereich des Energieabsorptionselementes auftrifft. Bei einem Auftreffen im Bereich des Führungselementes ist der Passagier allerdings ungeschützt.

Es ist daher Aufgabe der vorliegenden Erfindung, ein Dachmodul zu schaffen, das ein vorteilhaftes Unfallverhalten auf kosten- und gewichtsgünstige Weise ermöglicht.

Diese Aufgabe wird durch ein Dachmodul mit den Merkmalen des Patentanspruchs 1 gelöst. Vorteilhafte Ausgestaltungen mit zweckmäßigen und nicht-trivialen Weiterbildungen der Erfindung sind in den übrigen Ansprüchen angegeben.

Um ein Dachmodul zu schaffen, welches ein besonders vorteilhaftes Unfallverhalten auf kosten- und gewichtsgünstige Weise ermöglicht, ist es erfindungsgemäß vorgesehen, dass wenigstens eines der Führungselemente zumindest in einem Absorbierbereich als Energieabsorptionselement ausgebildet ist, welches bei einem zumindest mittelbaren Aufprall des Kopfes eines Fahrzeuginsassen auf das Energieabsorptionselement unter Energieverzehrung verformbar ist. In das wenigstens eine Führungselement ist somit eine Absorberfunktion integriert, so dass dem wenigstens einen Führungselement eine Doppelfunktion zukommt. Zum Einen dient das wenigstens eine Führungselement somit zum Führen des Deckelelements, so dass es definiert, verklemmungs- und klapperfrei zwischen der Schließstellung und der Offenstellung verstellbar ist. Zum anderen dient das wenigstens eine Führungselement aber auch dazu, bei einer unfallbedingten Kraftbeaufschlagung und einem daraus resultierenden, zumindest mittelbaren Aufprall des Kopfes auf das Führungselement unter Verformung dieses Unfallenergie in Verformungsenergie umzuwandeln und somit unfallbedingte Kräfte aufzunehmen und/oder abzubauen. Dadurch können aus der unfallbedingten Kraftbeaufschlagung und aus dem Aufprall resultierende und auf den Fahrzeuginsassen wirkende Kräfte gering gehalten werden. Ferner kann dieses vorteilhafte Unfallverhalten auf besonders einfache, kosten- und gewichtsgünstige Weise realisiert werden, da die Absorberfunktion in das wenigstens eine Führungselement integriert ist und die Montage des Energieabsorptionselements am Fahrzeugdach mit der Montage des Dachmoduls am Fahrzeugdach zeitgleich einhergeht. Somit kann die Anzahl von zusätzlichen Energieabsorptionselementen sowie der Aufwand zum Montieren dieser vermieden oder in einem besonders geringen Rahmen gehalten werden.

Das Deckelelement, welches mittels der Führungselemente entlang dieser geführt verstellbar ist, ist beispielsweise ein eigensteifes Deckelelement eines Schiebe- und/oder Hebedaches des Dachmoduls. Das Schiebe- und/oder Hebedach ist beispielsweise als außen laufendes Schiebedach oder als Schiebe-Hebe-Dach (SHD) ausgebildet.

Die Führungselemente können alternativ oder zusätzlich auch zum Führen eines Sonnenschutzelements als das Deckelelement dienen, wobei das Sonnenschutzelement beispielsweise ein Flächenelement eines Rollos ist. Mittels des flexiblen Flächenelements ist die Dachöffnung in der Schließstellung zumindest in dem Teilbereich überdeckt, so dass ein Einfall von Sonnenlicht über die Dachöffnung in den Innenraum gegenüber der Offenstellung verringert ist.

Erfindungsgemäß weist das wenigstens eine Führungselement in dem Absorbierbereich einen offenen Hohlquerschnitt auf. Dadurch kann sich der Absorbierbereich bei einer Krafteinleitung infolge des zumindest mittelbaren Aufpralls des Kopfes besonders gut verformen und somit unfallbedingte Kräfte aufnehmen und/oder abbauen.

Zur Realisierung einer besonders vorteilhaften Absorberfunktion ist in dem Absorbierbereich wenigstens eine Rippe und/oder wenigstens ein Kanal und/oder ein entsprechender Querschnitt zur Energieverzehrung vorgesehen.

Eine weitere Ausführungsform zeichnet sich dadurch aus, dass das wenigstens eine Führungselement zumindest in dem Absorbierbereich aus einem Leichtmetall bzw. einer Leichtmetalllegierung, insbesondere aus Aluminium bzw. aus einer Aluminiumlegierung, gebildet ist. Das wenigstens eine Führungselement weist somit in dem Absorbierbereich eine sehr gute Duktilität und somit eine sehr gute Verformbarkeit auf, so dass Aufprallenergie besonders effektiv und effizient in Verformungsenergie umwandelbar ist.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

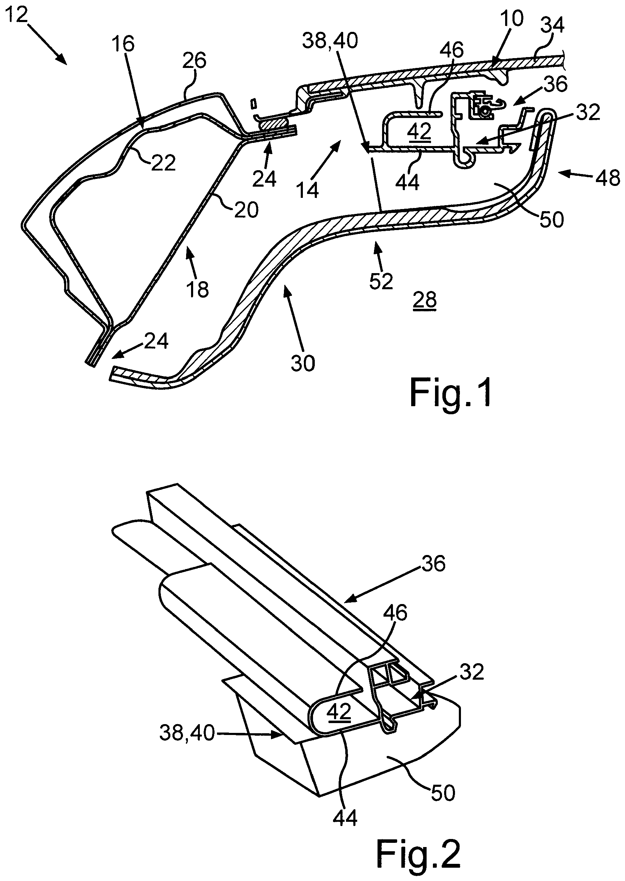

- Fig. 1: ausschnittsweise eine schematische Querschnittsansicht durch ein Dachmoduls für ein Fahrzeugdach eines Personenkraftwagens, mit in Fahrzeugquerrichtung voneinander beabstandeten seitlichen Führungselementen und mit wenigstens einem Deckelelement, wobei wenigstens eines der Führungselemente zumindest an einem Absorbierbereich als Energieabsorptionselement ausgebildet ist, welches bei einem zumindest mittelbaren Aufprall des Kopfes eines Fahrzeuginsassen auf das Energieabsorptionselement unter Energieverzehrung verformbar ist; und
- Fig. 2: ausschnittsweise eine schematische und geschnittene Perspektivansicht auf das wenigstens eine Führungselement.

Fig. 1 zeigt in einer schematischen Querschnittsansicht ein Dachmodul 10 für ein Fahrzeugdach 12 eines Personenkraftwagens. Das Fahrzeugdach 12 weist eine Dachöffnung 14 auf, welche in Fahrzeugquerrichtung durch jeweilige seitliche Dachrahmen 16 eines Rohbaus 18 des Fahrzeugdaches 12 begrenzt ist. Die seitlichen Dachrahmen 16 umfassen jeweils ein Innenteil 20 und ein Außenteil 22, welche über jeweilige Fügflansche 24 miteinander verbunden sind. Darüber hinaus ist in Fig. 1 eine Seitenwand 26 zu erkennen, mittels welcher der Dachrahmen 16 nach außen hin verkleidet ist. Um den Rohbau 18 zum Innenraum 28 des Personenkraftwagens hin zu verkleiden, ist ein Verkleidungselement 30 vorgesehen.

Das Dachmodul 10 ist zumindest teilweise in die Dachöffnung 14 eingesetzt und umfasst zwei in Fahrzeugquerrichtung voneinander beabstandete seitliche Führungselemente in Form von Führungsschienen 32 sowie ein Deckelelement vorliegend in Form eines Deckelelements 34, welches vorliegend als Glasdeckel ausgebildet und somit transparent ist. Das Deckelelement 34 ist zwischen einer die Dachöffnung 14 zumindest in einem Teilbereich überdeckenden Schließstellung und einer die Dachöffnung 14 in dem Teilbereich freigebenden Offenstellung entlang der seitlichen Führungsschienen 32 geführt verstellbar. Vorliegend sind das Deckelelement 34 und die Führungsschienen 32 einem sogenannten außen laufenden Schiebedach (ASD) zugeordnet.

Wie in Zusammenschau mit Fig. 2 erkennbar ist, weist die jeweilige Führungsschiene 32 einen Führungsbereich 36 auf, in welchem wenigstens ein Führungskanal vorgesehen ist. Dieser Führungskanal dient dabei zum Führen des Deckelelements 34 bei dessen Verstellung. Mit anderen Worten wird das Deckelelement 34 in dem jeweiligen Führungskanal zwischen der Offenstellung und der Schließstellung verschoben. Im jeweiligen Führungsbereich 36 der jeweiligen Führungsschiene 32 kann beispielsweise auch jeweils wenigstens eine weitere Führung beispielsweise in Form eines Führungskanals vorgesehen sein, entlang denen beispielsweise ein Sonnenschutzelement, beispielsweise ein biegeschlaffes Flächenelement eines Rollos, geführt verschiebbar ist.

Um nun ein besonders vorteilhaftes Unfallverhalten des Fahrzeugdaches 12 auf besonders kosten- und gewichtsgünstige Weise zu realisieren, ist die jeweilige Führungsschiene 32 (Führungselement) in einem Absorbierbereich 38 zumindest über einen Teilbereich ihrer Längserstreckung als Energieabsorptionselement 40 ausgebildet, welches bei einem zumindest mittelbaren Aufprall des Kopfes eines Fahrzeuginsassen auf das Energieabsorptionselement 40 unter Energieverzehrung verformbar ist. Der jeweiligen Führungsschiene 32 kommt somit eine Doppelfunktion zu, da sie zum einen zum Führen des Deckelelements 34 und zum andern zum Aufnehmen und/oder Abbauen von Aufprallenergie verwendet wird.

Der Absorbierbereich 38 und der Führungsbereich 36 sind dabei einstückig miteinander ausgebildet, wobei im Absorbierbereich 38 wenigstens ein zusätzlicher Querschnitt 42 zur Aufnahme von unfallbedingten Kräften vorgesehen ist. Wie insbesondere aus Fig. 1 erkennbar ist, ist der Querschnitt 42 als offener Hohlquerschnitt ausgebildet, welcher besonders gut verformbar ist und somit Aufprallenergie besonders gut in Verformungsenergie umwandeln kann.

Der Absorbierbereich 38 schließt sich in Fahrzeugquerrichtung nach außen hin an den Führungsbereich 36 der Führungsschiene 32 an, wobei der Absorbierbereich 38 in Fahrzeugquerrichtung nach außen von dem Führungsbereich 36 absteht. Im Absorbierbereich 38 sind entsprechende, den offenen Hohlquerschnitt (Querschnitt 42) zumindest teilweise begrenzende Wandungen 44, 46 vorgesehen, welche vom Führungsbereich 36 in Fahrzeugquerrichtung abstehen. Bei einer entsprechenden unfallbedingten Kraftbeaufschlagung kommt es zu einer unfallbedingten Verlagerung des Kopfes des Fahrzeuginsassen, wodurch der Kopf zumindest mittelbar im Absorbierbereich 38 auf die Führungsschiene 32 aufprallt. Durch die Wandungen 44, 46 ist dabei ein Hebelarmkonzept geschaffen, über welches es zu einer Krafteinleitung in die jeweilige Führungsschiene 32 kommen kann. Aufgrund der Ausgestaltung des Querschnitts 42 als offener Hohlquerschnitt kann der Absorbierbereich 38 der Krafteinleitung ausweichen und nachgeben und sich sehr gut verformen, um die unfallbedingten Kräfte abzubauen. Somit ist ein kopfaufpralloptimiertes Hebelarmkonzept geschaffen.

Trifft der Kopf beispielsweise in einem Auftreffbereich 52 auf das Verkleidungselement 30 und über dieses auf den Absorbierbereich 38 auf, so wirkt die Wandung 44 als Stützfläche, und die Stützfläche und das Energieabsorptionselement 40 bremsen den Kopf rechtzeitig und energieabsorbierend ab. Die Führungsschiene 32 bietet somit für einen Aufprall im Auftreffbereich 52 die zusätzliche Stützfläche und es kommt z einer Energieabsorption durch das Energieabsorptionselement 40.

Trifft der Kopf in einem Auftreffbereich 48 auf das Verkleidungselement 30 und über die Führungsschiene 32 auf, so können die Führungsschiene und insbesondere der Führungsbereich 36 über den langen, durch die Wandung 44 bereitgestellten Hebelarm nach oben wegtauchen. Dabei kommt es zu einer Energieabsorption durch den sich deformierenden und durch die Wandung 44 bereitgestellten Hebelarm. Bei einem Aufprall im Auftreffbereich 48 wirkt die Führungsschiene 32 somit energieabsorbierend über den Hebelarm.

Wie anhand von Fig. 1 und 2 ferner erkennbar ist, ist in Fahrzeughochrichtung unterhalb der jeweiligen Führungsschiene 32 zum Innenraum 28 hin ein jeweiliges Absorberelement 50 vorgesehen, welches zwischen der Führungsschiene 32 und dem Verkleidungselement 30 angeordnet ist. Infolge der unfallbedingten Verlagerung des Kopfes kommt dieser über das Verkleidungselement 30 in Stützanlage mit dem Absorberelement 50 und über dieses in Stützanlage mit dem Absorbierbereich 38. Das Absorberelement 50 wird dabei verformt und wandelt somit zusätzlich Aufprallenergie in Verformungsenergie um. Dies führt zu einem besonders guten Schutz des Fahrzeuginsassen.

Vorzugsweise sind der Absorbierbereich 38 und der einstückig mit diesem ausgebildete Führungsbereich 36 aus Aluminium bzw. einer Aluminiumlegierung ausgebildet, wodurch insbesondere der Absorbierbereich 38 in Zusammenspiel mit dem offenen Hohlquerschnitt eine sehr gute Verformbarkeit aufweist.

Durch die Integration der geschilderten Absorberfunktion in die jeweilige Führungsschiene 32 können die Kosten, das Gewicht und der Aufwand zur Realisierung des vorteilhaften Unfallverhaltens gering gehalten werden, da die Montage des Energieabsorptionselements 40 mit der Montage des Dachmoduls 10 einhergeht. Zeit- und kostenaufwändige, zusätzliche Montageschritte können vermieden werden. Darüber hinaus ist aufgrund der Integration eine besonders effektive Energieabsorption auf nur sehr geringem Raum realisierbar, so dass bei gegebenen äußeren Abmessungen des Personenkraftwagens ein Raumgewinn erzielt werden kann.

## Patentansprüche

1. Dachmodul für ein Fahrzeugdach (12) eines Personenkraftwagens, mit wenigstens einem Deckelelement (34), welches zwischen einer eine Dachöffnung (14) überdeckenden Schließstellung und einer die Dachöffnung (14) zumindest in einem Teilbereich freigebenden Offenstellung entlang von in Fahrzeugquerrichtung voneinander beabstandeten seitlichen Führungselementen (32) geführt verstellbar ist, wobei wenigstens eines der Führungselemente (32) zumindest in einem Absorbierbereich (38) als Energieabsorptionselement (40) ausgebildet ist, welches bei einem zumindest mittelbaren Aufprall des Kopfes eines Fahrzeuginsassen auf das Energieabsorptionselement (40) unter Energieverzehrung verformbar ist, **dadurch gekennzeichnet, dass**
sich der Absorbierbereich (38) in Fahrzeugquerrichtung nach außen hin an einen Führungsbereich (36) zum Führen des Deckelelements (34) anschließt, wobei das wenigstens eine Führungselement (32) in dem Absorbierbereich (38) einen offenen Hohlquerschnitt (42) aufweist.

2. Dachmodul nach Anspruch 1,
**dadurch gekennzeichnet, dass**
in dem Absorbierbereich (38) wenigstens eine Rippe und/oder wenigstens ein Kanal zur Energieverzehrung vorgesehen ist.

3. Dachmodul nach einem der vorhergehenden Ansprüche,
**dadurch gekennzeichnet, dass**
das wenigstens eine Führungselement (32) zumindest in dem Absorbierbereich (38) aus einem Leichtmetall, insbesondere aus Aluminium, gebildet ist.

## Claims

1. Roof module for a vehicle roof (12) of a passenger vehicle, comprising at least one cover element (34) movable and guided along lateral guide elements (32) spaced in the transverse direction of the vehicle between a closed position covering a roof opening (14) and an open position uncovering the roof opening (14) at least in a sub-region, wherein at least one of the guide elements (32) is, at least in an absorbing region (38), designed as an energy absorption element (40), which is deformable at an at least indirect impact of the head of a vehicle occupant on the energy absorption element (40) while consuming energy,
**characterised in that**
the absorbing region (38) is adjoined in the transverse direction of the vehicle towards the outside by a guide region (36) for guiding the cover element (34), the at least one guide element (32) having an open hollow cross-section (42) in the absorbing region (38).

2. Roof module according to claim 1,
**characterised in that**
at least one rib and/or at least one channel is/are provided in the absorbing region (38) for energy consumption.

3. Roof module according to any of the preceding claims,
**characterised in that**
the at least one guide element (32) is made of a light metal, in particular of aluminium, at least in the absorbing region (38).

## Revendications

1. Module de toit de véhicule (12) d'un voiture automobile particulière, comprenant au moins un élément de recouvrement (34), qui peut être déplacé entre une position de fermeture recouvrant une ouverture de toit (14) et une position ouverte libérant au moins l'ouverture de toit (14) au moins dans une zone partielle le long d'éléments de guidage (32) latéraux éloignés les uns des autres dans la direction transversale du véhicule, au moins l'un des éléments de guidage (32) étant conçu dans une zone d'absorption (38) en tant qu'élément d'absorption d'énergie (40), qui peut se déformer par absorption d'énergie en cas d'un choc au moins indirect de la tête d'un occupant du véhicule contre l'élément d'absorption d'énergie (40), **caractérisé en ce que** la zone d'absorption (38) dans la direction transversale du véhicule est dans le prolongement vers l'extérieur d'une zone de guidage (36) servant à guider l'élément de recouvrement (34), l'au moins un élément de guidage (32) présentant dans la zone d'absorption (38) une section transversale creuse ouverte (42).

2. Module de toit selon la revendication 1, **caractérisé en ce que** dans la zone d'absorption (38) est ménagé(e) au moins une nervure et/ou au moins un canal destiné à absorber l'énergie.

3. Module de toit selon l'une quelconque des revendications précédentes, **caractérisé en ce que** l'au moins un élément de guidage (32) est conçu au moins dans la zone d'absorption (38) en métal léger, en particulier, en aluminium.
